# EUROPEAN PATENT APPLICATION

(11) **EP 1 052 158 A2**
(43) Date of publication of application: **15.11.2000**
(21) Application number: 00106910.3
(22) Date of filing: 31.03.2000
(51) Int. Cl.: B62D 3/14, B62D 5/06

(54) **Automotive hydraulic steering system**

(30) Priority: 12.05.1999 US 311169
(71) Applicant: DaimlerChrysler Corporation, Chrysler Technology Center, Auburn Hills, Michigan 48326-2757 (US)
(72) Inventor: Burrell, James K., Canton, Michigan 48188 (US); Estes, Howard A. Jr, Ann Arbor, Michigan 48105 (US); Lyman Steven.P, Canton, Michigan 48188 (US)
(74) Representative: Dahmen, Toni, Dipl.-Ing.

(57) **Abstract**

A hydraulic control circuit (30) for a vehicle steering system (10) is provided. The hydraulic control circuit (30) is responsive to the rotational position of a steering wheel (32) and controls the actuation of a steering gear assembly (28) in response thereto. The hydraulic circuit (30) includes a first actuator (66) coupled to the vehicle steering wheel (32) and a second hydraulic actuator (68) coupled to the vehicle steering gear assembly (28). The first and second hydraulic actuators (66,68) are coupled together by a pair of fluid conduits (78). Rotation of the steering wheel (32) selectively causes the first actuator (66) to force hydraulic fluid through one of the plurality of fluid conduits (78) to cause the second hydraulic actuator (68) to produce a corresponding output motion. The corresponding output motion is operable for actuating the steering gear assembly (28) in a predetermined direction. The preferred embodiment includes a control system for improved monitoring and control of the hydraulic circuit, as well as an assist pump and compensation valve for gain control.

## Description

### BACKGROUND OF THE INVENTION

### 1. Technical Field

The present invention relates generally to vehicle steering systems and more particularly to a vehicle steering system which is hydraulically actuated.

### 2. Discussion

The steering system of modern vehicles includes a steering gear assembly, a steering wheel and an intermediate shaft. The steering gear assembly may be of the manual type wherein the energy for turning the vehicle wheels is supplied by the vehicle operator through the steering wheel, or a power-assisted type where the energy for turning the vehicle wheels is provided by mechanical or hydro-mechanical devices. The intermediate shaft extends through the vehicle firewall and couples the steering wheel to the steering gear assembly.

The placement of the steering gear assembly relative to the steering wheel and the vehicle engine typically complicate the packaging of the intermediate shaft into a vehicle. Frequently, one or more universal joints or knuckles are required to route the intermediate shaft through the engine compartment to the steering gear assembly. This design strategy, however, has several significant drawbacks.

These drawbacks relate primarily to the effort required to package the intermediate shaft into a vehicle. In addition to the engineering efforts required to both identify potential interferences and to re-design the intermediate shaft or other vehicle components to eliminate the interference, the use of an intermediate shaft renders the installation and servicing of the engine and its related components more difficult.

Another drawback inherent in the use of intermediate shafts is their tendency to transmit noise and vibration from the vehicle suspension system to the steering wheel. The drawbacks of the intermediate shaft are further magnified where the vehicle is to have a right-hand steering system option wherein the steering wheel is positioned on the right side of the vehicle. While the design of several of the steering system components may simply be mirrored, this is typically not true for intermediate shafts as interference points with the vehicle engine change.

Consequently, there remains a need in the art for an improved vehicle steering system which eliminates the intermediate shaft.

### SUMMARY OF THE INVENTION

It is therefore one object of the present invention to provide a vehicle steering system which does not utilize an intermediate shaft to couple the vehicle steering gear assembly to the vehicle steering wheel.

It is another object of the present invention to provide a vehicle steering system which includes a hydraulic circuit which controls the position of an output member of the steering system in relation to the rotational position of a steering wheel.

It is a more specific object of the present invention to provide a vehicle steering system which utilizes hydraulic circuit having a pair of hydraulic actuators to control the steering gear assembly.

A hydraulic control circuit for a vehicle steering system is provided. The hydraulic control circuit is responsive to the rotational position of a steering wheel and controls the actuation of a steering gear assembly in response thereto. The hydraulic circuit includes a first actuator coupled to the vehicle steering wheel and a second hydraulic actuator coupled to the vehicle steering gear assembly. The first and second hydraulic actuators are coupled together by a pair of fluid conduits. Rotation of the steering wheel selectively causes the first actuator to force hydraulic fluid through one of the plurality of fluid conduits to cause the second hydraulic actuator to produce a corresponding output motion. The corresponding output motion is operable for actuating the steering gear assembly in a predetermined direction. The preferred embodiment includes a control system for improved monitoring and control of the hydraulic circuit, as well as an assist pump and compensation valve for gain control.

Additional advantages and features of the present invention will become apparent from the subsequent description and the appended claims, taken in conjunction with the accompanying drawings.

### BRIEF DESCRIPTION OF THE DRAWINGS

Figure 1 is a partial cut-away perspective view of a vehicle having a steering system constructed in accordance with the preferred embodiment of the present invention;
Figure 2 is a schematic diagram of the steering system of the present invention according to a presently preferred embodiment;
Figures 3A-C are schematic diagrams of a portion of the hydraulic circuit of the present invention showing several configurations of the steering valve;
Figures 3D-F are schematic diagrams of a portion of the hydraulic circuit of the present invention showing several configurations of the drive member;
Figure 4 is a schematic diagram of the steering system of the present invention according to a first alternate embodiment of the present invention;
Figure 5 is a schematic diagram of the steering system of the present invention according to a second alternate embodiment of the present invention.

### DETAILED DESCRIPTION OF THE PREFERRED EMBODIMENT

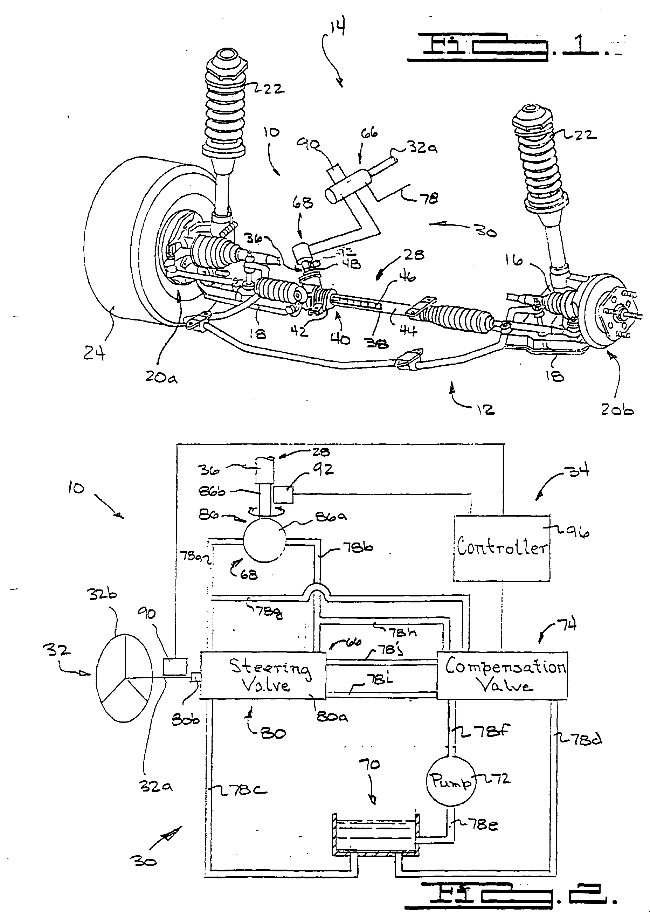

With reference to Figure 1 of the drawings, the hydraulic steering system of the present invention is generally designated by reference numeral 10. Hydraulic steering system 10 is shown in operative association with the suspension system 12 of vehicle 14. Suspension system includes a frame rail 16, control arms 18, axle hub assemblies 20, strut assemblies 22 and wheels 24 which are conventional in design. Wheel hub assemblies 20 are pivotably coupled to control arms 18 and operable between a first position and a second position. Operation of the wheel hub assemblies 20 between the first and second position controls the relative position of the wheels 24 to the frame rail 16 to thereby control the direction in which vehicle 14 is propelled or steered.

With additional reference to Figure 2, hydraulic steering system 10 is shown to include a steering gear assembly 28, a hydraulic circuit 30, a steering wheel assembly 32 and preferably, a control system 34. Steering gear assembly 28 is shown to include an input member 36 and an output member 38. Output member 38 is coupled to wheel hub assemblies 20a and 20b and operable between a first steering position and a second steering position for selectively positioning wheel hub assemblies 20 between the first and second positions, respectively. Input member 36 is operable for selectively positioning output member 38 between the first and second steering positions.

As illustrated, steering gear assembly is a rack-and-pinion type steering gear assembly 40. It will be understood, however, that the reference to a rack-and-pinion steering gear assembly is merely exemplary and that the present invention has applicability to other types of steering gear assemblies. Rack-and-pinion steering gear assembly 40 includes a housing 42, a rack member 44 having a plurality of rack teeth 46 and an input shaft 48 having a pinion 50 with a plurality of pinion teeth 52. Housing 42 is operable for axially supporting rack member 44, rotatably supporting input shaft 48 and aligning rack member 44 relative to pinion 50 such that pinion teeth 52 meshingly engage rack teeth 46.

Rotation of input shaft 48 in a first rotational direction is operable for causing pinion 50 to move rack member 44 relative to housing 42 (e.g., in a direction which extends rack member 44 from housing 42) to position rack-and-pinion steering gear assembly 40 toward the first steering gear position. Continued rotation of input shaft 48 in the first rotational direction in a predetermined amount causes rack-and-pinion steering gear assembly 40 to be positioned in the first steering gear position. Similarly, rotation of input shaft 48 in a second rotational direction is operable for causing pinion 50 to move rack member 44 relative to housing (e.g., in a direction which retracts rack member 44 into housing 42) to position rack-and-pinion steering gear assembly 40 toward the second steering gear position. Continued rotation of input shaft 48 in the second rotational direction in a predetermined amount causes rack-and-pinion gear assembly to be positioned in the second gear position.

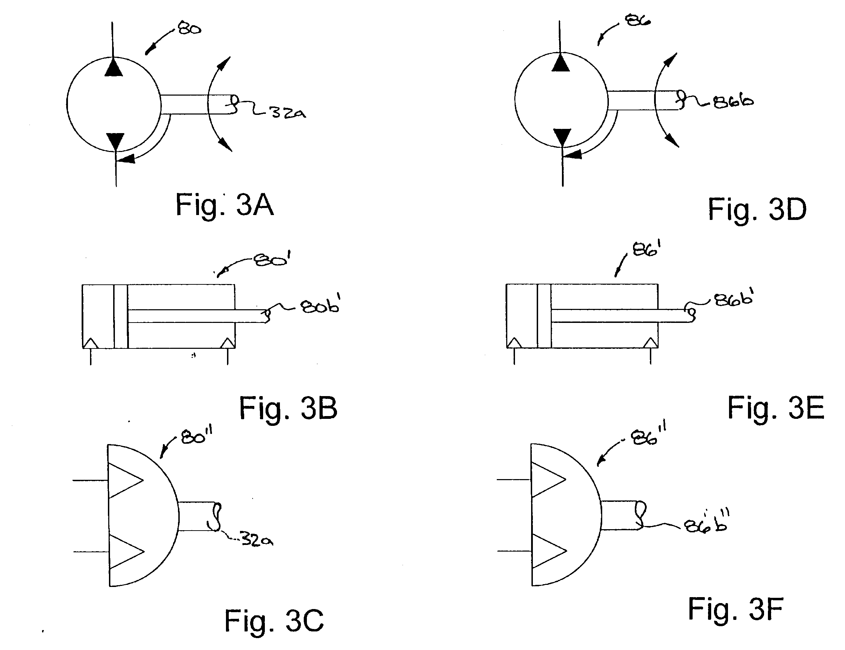

Hydraulic circuit 30 includes a steering valve 66, a drive member 68, a reservoir 70, an assist fluid pump 72, a compensation valve 74 and a plurality of fluid conduits 78. Steering valve 66 is operable for selectively regulating the flow of hydraulic fluid to drive member 68 in response to the rotational position of steering wheel assembly 32. With brief additional reference to Figures 3A-C, steering valve 66 may include any type of hydraulic actuator which selectively transmits hydraulic fluid through fluid conduits 78a and 78b in response to the rotation of steering wheel assembly 32 such as a hydraulic motor 80, a hydraulic cylinder 80' or a rotac (rotary actuator) 80''.

Preferably, steering valve 66 includes a hydraulic motor 80 having a housing 80a fixed to a stationary portion of the vehicle and a rotor portion 80b which is coupled for rotation with the shaft 32a of steering wheel assembly 32. Rotation of steering wheel assembly 32 causes rotor portion 80b to rotate relative to housing 80a. The relative rotation of rotor portion 80b creates a pumping action which forces hydraulic fluid through one of the fluid conduits 78a and 78b depending on the direction in which steering wheel assembly 32 is rotated. The amount of fluid pumped to drive member 68 is dependent upon the amount by which rotor portion 80b is rotated relative to housing 80a.

Drive member 68 includes an output drive member 82 which is operable in a first mode and a second mode. Output drive member 82 and input member 36 are coupled together and cooperate to position output member 38. Operation of output drive member 82 in the first mode causes input member 36 to position output member 38 toward the first steering position and operation of output drive member 82 in the second mode causes input member 36 to position output member 38 toward the second steering position.

Drive member 68 preferably includes a hydraulic motor 86 having a body portion 86a fixed to a stationary portion of the vehicle and an rotor portion 86b coupled for rotation with input shaft 48. It will be understood, however, that the reference to a hydraulic motor is not intended to be limiting and as such, the scope of the present innovation includes drive members which utilize other hydraulic mechanisms such as a hydraulic cylinder 86' or a rotac (rotary actuator) 86'' as shown in Figures 3D-F. Hydraulic motor 86 is operable in a plurality of modes which are selected in response to the direction of hydraulic fluid into fluid conduits 78a and 78b by steering valve 66.

When hydraulic fluid is directed into fluid conduit 78a, hydraulic motor 86 is caused to operate in the first mode wherein rotor portion 86b is rotated in the first rotational direction. Since rotor portion 86b is coupled for rotation with input shaft 48, operation of hydraulic motor 86 in this manner causes rack-and-pinion steering gear assembly 40 to position wheel hub assemblies 20 in a direction toward the first position. Hydraulic fluid in an amount approximately equal to that input to hydraulic motor 86 through fluid conduit 78a is discharged from hydraulic motor 86 to fluid conduit 78b and directed back to steering valve 66. As such, hydraulic fluid is continually circulated between steering valve 66 and drive member 68 in response to the rotational position of steering wheel assembly 32.

Similarly, when hydraulic fluid is directed into fluid conduit 78b, drive member 68 is caused to operate in the second mode wherein rotor portion 86b is rotated in the second rotational direction. Since rotor portion 86b is coupled for rotation with input shaft 48, operation of hydraulic motor 86 in this manner causes rack-and-pinion steering gear assembly 40 to position wheel hub assemblies 20 in a direction toward the second position. Hydraulic fluid in an amount approximately equal to that input to hydraulic motor 86 through fluid conduit 78b is discharged from hydraulic motor 86 to fluid conduit 78a and directed back to steering valve 66.

Reservoir 70 is operable for storing fluid in an unpressurized state for use by hydraulic circuit 30. Fluid conduits 78c and 78d permit hydraulic fluid to be returned to reservoir 70 from steering valve 66 and compensation valve 74, respectively. Fluid conduit 78e permits hydraulic fluid to be supplied to assist pump 72.

Assist pump 72 is operable for increasing the pressure of the hydraulic fluid in hydraulic circuit 30. Hydraulic fluid exiting assist pump 72 is directed through fluid conduit 78f to compensation valve 74 which is operable for selectively supplementing the flow of hydraulic fluid to steering valve 66 and fluid conduits 78a and 78b.

Control system 34 is shown to include a steering sensor 90, a drive member sensor 92 and an electronic controller 96. Steering sensor 90 is operable for sensing the position of steering wheel assembly 32 and producing a steering sensor signal in response thereto. Drive member sensor 92 is operable for sensing the position of rotor portion 86b and producing an output portion sensor signal in response thereto. Electronic controller 96 is coupled to steering sensor 90, drive sensor 92 and compensation valve 74. Electronic controller 96 is operable for monitoring the steering sensor and drive sensor signals and controlling compensation valve 74 in response thereto. Electronic controller 96 is therefore operable for maintaining the rotational relationship between steering wheel assembly 32 and vehicle 14 regardless of any leakage of hydraulic fluid from compensation valve 74, steering valve 66, drive member 68 or fluid conduits 78. Such control causes the steering wheel portion 32b of steering wheel assembly 32 to be returned to a consistent position relative to vehicle 14 to permit the vehicle operator to access any controls which may be mounted on steering wheel assembly, including controls for the vehicle radio system, cruise control system and horn.

Electronic controller 96 maintains the rotational relationship between steering wheel assembly and vehicle 14 through a selective supplemental flow of hydraulic fluid between compensation valve 74 and the fluid conduits 78g and 78h. For example, where additional hydraulic fluid was needed in fluid conduit 78a to correct the rotational relationship of steering wheel assembly 32, electronic controller 96 controls compensation valve 74 to permit a predetermined amount of supplemental fluid to enter into fluid conduit 78a from fluid conduit 78g and drain a predetermined amount of fluid from fluid conduit 78b through fluid conduit 78h. Similarly, where the rotational relationship is skewed in an opposite direction, electronic controller 96 controls compensation valve 74 permit a predetermined amount of supplemental fluid to enter fluid conduit 78b from fluid conduit 78h and drain a predetermined amount of fluid from fluid conduit 78a through fluid conduit 78g.

Control system 34 also includes a load sensor signal in response to the position of rotor portion 80b. In the particular embodiment illustrated, load sensor signal is transmitted from steering valve 66 to compensation valve 74 through hydraulic fluid in fluid conduit 78i. The signal preferably consists of the pressure of the fluid in fluid conduit 78i. Alternatively, the load sensor signal may also be an electronic sensor signal generated by an electronic sensor which directly or indirectly senses the position of rotor portion 80b relative to housing 80a. In response to the load sensor signal, compensation valve 74 is operable for selectively supplementing the flow of fluid to steering valve 66 through fluid conduit 78j with hydraulic fluid provided by assist pump 72. Operation of compensation valve 74 in this manner effectively amplifies the torque input hydraulic steering system 10 through steering wheel assembly 32 to provide a predetermined level of gain or power-assistance. Compensation valve 74 may be configured to provide an incremental level of power-assistance where the fluid output through fluid conduit 78j is proportional to the position of rotor portion 80b. Compensation valve 74 may also be configured to provide a variable level of power-assistance where the amount of supplemental fluid supplied to drive member 68 through fluid conduit 78j is varied depending upon the position of rotor portion 80b.

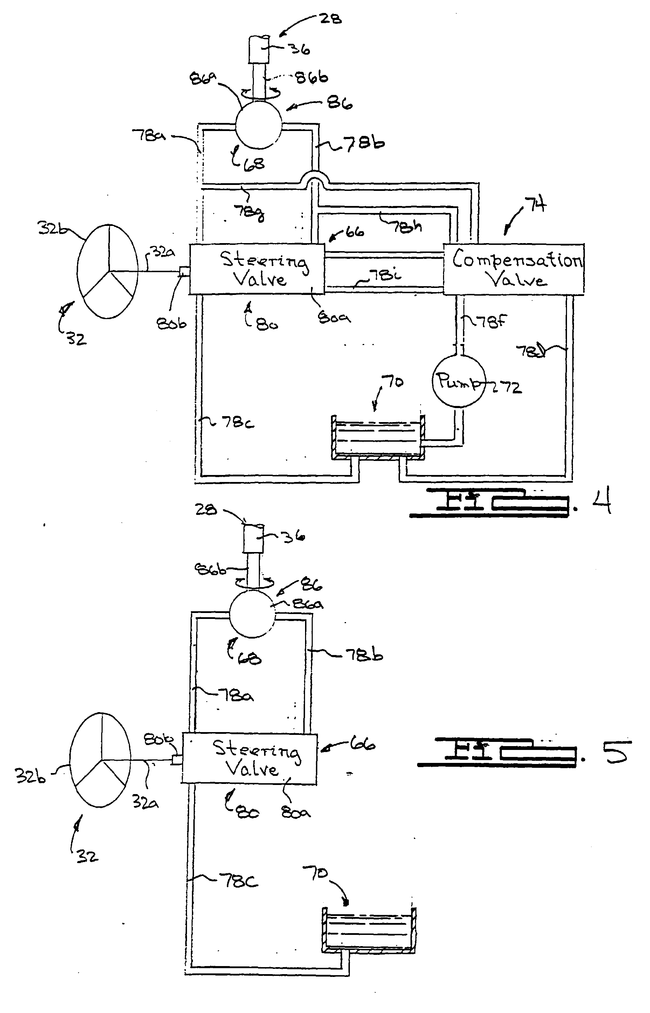

A first alternate embodiment of the present invention is schematically illustrated in Figure 4. Hydraulic steering system 10' is substantially similar to hydraulic steering system 10 described above except that control system 34' includes only the load sensor signal from steering valve 66 to compensation valve 74'. Consequently, hydraulic steering system 10' may provide a predetermined level of gain or power-assistance, but cannot monitor the relative relationship between steering wheel assembly 32 and the position of rotor portion 86b to actively compensate for any discrepancies in the rotational position of steering wheel assembly 32. Those skilled in the art should understand that hydraulic steering system 10 preferably functions in a manner similar to hydraulic steering system 10' in the event that electronic controller 96 fails.

A second alternate embodiment of the present invention is schematically illustrated in Figure 5. Hydraulic steering system 10'' is substantially similar to hydraulic steering system 10' described above except that the control system, the compensation valve and the fluid pump which provides pressurized hydraulic fluid directly to steering valve 66 are eliminated. Consequently, enhanced system features such as gain or power-assistance and the monitoring of relative relationship between steering wheel assembly 32 and the position of rotor portion 86b are not available. Those skilled in the art should understand that hydraulic steering systems 10 and 10' preferably function in a manner similar to hydraulic steering system 10'' in the event that compensation valve 74 or assist pump 72 fails.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the description of the appended claims.

## Claims

1. A control system for a vehicle steering system having a steering wheel and a steering gear assembly for controlling a direction in which said vehicle is propelled, said steering gear assembly having a steering gear input member and an steering gear output member, said steering gear output member operable between a first steering position and a second steering position, said steering gear input member operable for and controlling a position of said steering gear output member between said first and second steering positions, said control system comprising:
a first fluid conduit;
a second fluid conduit;
a first hydraulic actuator coupled to said first and second fluid conduits, said first hydraulic actuator having a housing and a driven portion, said driven portion movable in a first direction relative to said housing and causing a flow of hydraulic fluid from said housing into said first fluid conduit in response thereto, and said driven portion movable in a second direction relative to said housing and causing a flow of hydraulic fluid from said housing into said second fluid conduit in response thereto, said driven portion adapted for movement in said first and second directions in response to rotation of said steering wheel;
a second hydraulic actuator coupled to said first and second fluid conduits, said second hydraulic actuator having a housing and a drive portion, said drive portion movable in a first direction relative to said housing in response to said flow of hydraulic fluid through said first fluid conduit, said drive portion movable in a second direction opposite said first direction in response to said flow of hydraulic fluid through said second fluid conduit, said drive portion adapted for cooperation with said input member such that movement of said drive member in said first direction positions said steering gear assembly toward said first steering position and movement of said drive member in said second direction positions said steering gear assembly toward said second steering position.

2. The control system of Claim 1, wherein said first hydraulic actuator is a hydraulic motor.

3. The control system of Claim 1, wherein said first hydraulic actuator is a hydraulic cylinder.

4. The control system of Claim 1, wherein said second hydraulic actuator is a hydraulic motor.

5. The control system of Claim 1, wherein said second hydraulic actuator is a hydraulic cylinder.

6. The control system of Claim 1, further comprising:
a fluid pump providing a pressurized hydraulic; and
a compensation valve coupled to said fluid pump and said first hydraulic actuator, said compensation valve receiving said pressurized hydraulic fluid from said fluid pump and operable for selectively regulating a volume of said pressurized hydraulic fluid distributed to said first hydraulic actuator to produce a power-assist effect.

7. The control system of Claim 6, wherein said first hydraulic actuator and said compensation valve are coupled through a third fluid conduit and a fourth fluid conduit, said third fluid conduit operable for transmitting a load sensor signal to said compensation valve, said compensation valve controlling said volume of said pressurized hydraulic fluid distributed through said fourth fluid conduit in response to a magnitude of said load sensor signal.

8. The control system of Claim 7, wherein said load sensor signal is based on a pressure of a fluid in said third fluid conduit.

9. A steering system for a vehicle comprising:
a steering wheel;
a steering valve having a housing and a driven portion, said driven portion movable in a first direction relative to said housing and causing a flow of hydraulic fluid out of said housing in a first flow direction in response thereto, and said driven portion movable in a second direction relative to said housing and causing a flow of hydraulic fluid out of said housing in a second flow direction in response thereto, said driven portion moving in said first and second directions in response to rotation of said steering wheel;
a steering gear assembly adapted for controlling a direction in which said vehicle is propelled, said steering gear assembly having an input member and an output member, said output member operable between a first steering position and a second steering position, said input member operable for controlling a position of said output member between said first and second steering positions;
a drive member having a drive housing and a drive portion, said housing receiving said hydraulic fluid in said first and second flow directions, said drive portion movable in a first direction relative to said drive housing in response to receipt of said hydraulic fluid in said first flow direction, said drive portion movable in a second direction opposite said first direction in response to receipt of said hydraulic fluid in said second flow direction, said drive portion cooperating with said input member such that movement of said drive member in said first direction positions said steering gear assembly toward said first steering position and movement of said drive member in said second direction positions said steering gear assembly toward said second steering position.

10. The steering system for a vehicle of Claim 9, wherein said steering valve includes a hydraulic motor having a rotor coupled for rotation with said steering wheel.

11. The steering system for a vehicle of Claim 9, wherein said steering valve includes a hydraulic cylinder.

12. The steering system for a vehicle of Claim 9, wherein said drive member includes a hydraulic cylinder.

13. The steering system for a vehicle of Claim 9, wherein said drive member includes a hydraulic motor.

14. The steering system for a vehicle of Claim 9 further comprising:
a fluid pump providing a pressurized hydraulic; and
a compensation valve coupled to said fluid pump and said steering valve, said compensation valve receiving said pressurized hydraulic fluid from said fluid pump and operable for selectively regulating a volume of said pressurized hydraulic fluid distributed to said steering valve to produce a power-assist effect.

15. The steering system for a vehicle of Claim 14, wherein said first hydraulic actuator and said compensation valve are coupled through a third fluid conduit and a fourth fluid conduit, said third fluid conduit operable for transmitting a load sensor signal to said compensation valve, said compensation valve controlling said volume of said pressurized hydraulic fluid distributed through said fourth fluid conduit in response to a magnitude of said load sensor signal.

16. The steering system for a vehicle of Claim 15, wherein said load sensor signal is based on a pressure of a fluid in said third fluid conduit.

17. The steering system for a vehicle of Claim 16, wherein said volume of said pressurized hydraulic fluid distributed to said steering valve is directly proportional to said pressure in said third fluid conduit.

18. The steering system for a vehicle of Claim 17, wherein said volume of said pressurized hydraulic fluid distributed to said steering valve is varied in a predetermined manner in response to said pressure in said third fluid conduit.

19. The steering system for a vehicle of Claim 10, wherein said steering gear assembly is a rack-and-pinion gear assembly.

20. The steering system for a vehicle of Claim 19, wherein said output member is a toothed rack and said input member includes a toothed pinion meshingly engaging said toothed rack.
